# EUROPEAN PATENT APPLICATION

(11) **EP 3 309 719 A1**
(43) Date of publication of application: **18.04.2018**
(21) Application number: 16290198.7
(22) Date of filing: 12.10.2016
(51) Int. Cl.: G06N 3/04

(54) **OPTIMIZATION OF DEEP LEARNING MODELS**

(71) Applicant: Alcatel Lucent, 91620 Nozay (FR)
(72) Inventor: Forlivesi, Claudio, 2018 Antwerpen (BE); Kawsar, Fahim, 2018 Antwerpen (BE); Bhattacharya, Sourav, 15 Dublin (IE); Lane, Nicholas, Cambridge, CB24 6DD (GB)
(74) Representative: IP HILLS NV

(57) **Abstract**

According to an embodiment a computing system (200) for optimization of deep learning models (110) for use by an application (310) running on a mobile device is disclosed, the computing system (200) comprising a layer identification module (201) configured to identify similar layers between the deep learning models; a shared layer calculation module (202) configured to calculate a shared layer for similar layers as an approximation of the similar layers; and an update module (203) configured to update the deep learning models of the application with the shared layer thereby obtaining updated deep learning models.

## Description

### Technical Field

The present disclosure relates to the field of optimization of deep learning models.

### Background

Mobile devices, such as smartphone and tablets, run applications powered with artificial intelligence algorithms. Since these artificial intelligence algorithms, such as deep learning, require a large amount of calculations and thus high-performance computing power, they need to be performed in remote data centers.

### Summary

It is however a drawback that these calculations are performed in remote data centers since it requires the mobile device to have a persistent Internet connection resulting in a decrease of the mobile device's battery life, limited service availability, privacy concerns and/or increased costs for end users.

It is an object of the present disclosure to alleviate the above drawback and to provide a solution for performing artificial intelligence algorithms, such as deep learning, locally on mobile devices.

This object is achieved, according to a first aspect, by a computing system for optimization of deep learning models for use by an application running on a mobile device, the system comprising a layer identification module configured to identify similar layers between the deep learning models; a shared layer calculation module configured to calculate a shared layer for similar layers as an approximation of the similar layers; and an update module configured to update the deep learning models of the application with the shared layer thereby obtaining updated deep learning models.

Thus an application running on a mobile device operates by using deep learning models. A mobile device is a portable battery enabled communication device, such as a smartphone, a tablet or a portable computer. A computing system identifies similar layers between these deep learning models by a layer identification module. Next, based on these similar layers, a shared layer calculation module calculate a shared layer as an approximation of these similar layers. Finally, an update module updates the deep learning models of the application by replacing the similar layers between the deep learning models by the shared layer. Hence, updated deep learning models is obtained wherein similar layers are replaced by a shared layer.

If deep learning models have similar layers, same computations have to be performed more than once. Thus, if these similar layers are identified and are replaced by a shared layer, one computation performed for the shared layer may be re-used for the similar layers. This results in a reduction of computations needed to run the deep learning models and in an increase of the mobile device's battery life. Another advantage is that the deep learning models may be performed in the mobile device without a need to have a persistent Internet connection since the computing power of the mobile device is appropriate to perform the computations.

According to an embodiment, layers are identified as similar layers if similar layer inputs provide similar layer outputs.

In order to identify similar layers, the layer inputs and layer outputs are compared. In particular, if for two layers similar layer inputs provide similar layer outputs, the two layers are identified as similar. Such comparison may, for example, be performed by examining a ratio between magnitudes of differences of the inputs and magnitudes of differences of the outputs per layer. If this ratio between two layers is less than a threshold, the two layers are identified as similar layers.

The layer inputs and layer outputs may also be presented as points in a Euclidean space. In order to identify similar layers, a Euclidean distance between the points presented in a Euclidean space is considered and if the Euclidean distance is less than a predefined distance, the layers are identified as similar layers. Next, since layer inputs and layer outputs are presented in a Euclidean space, the calculation can as well be done in an efficient way by reducing the dimensionality of the layer inputs and layer outputs via algorithms such as Principal Component Analysis.

According to an embodiment, the shared layer calculation module is further configured to calculate a shared layer based on the average and standard deviation of the similar layer inputs and layer outputs.

This way, the shared layer will produce outputs for each layer it replaces that are close to the original layer. It is a further advantage that the calculation of averages and standard deviation can be done in an efficient way.

According to an embodiment, the system further comprises a model training module configured to train a deep learning model of the deep learning models based on training data.

A model training module receives training data. This training data may, for example, originate from a public dataset or a dataset suited for the application that is running on the device. Depending on the application running on the mobile devices, the basic characteristics of the deep learning models are predefined. Through this training data, the model training module updates weights composing linear parts of the deep learning models such that an error for a certain training data set is minimized. Hence, by use of training data suited for the application running on the mobile device, a deep learning model is trained such that it is adapted to the application.

According to an embodiment, the layer identification module is further configured to identify user-dependent layers within the deep learning model based on user feedback and to derive therefrom user-dependent training data.

Besides identifying similar layers between deep learning models, the layer identification module is further configured to identify user-dependent layers within a deep learning model. User-dependent layers within a deep learning model are layers which provide different outputs per layer for different users of the application for a same input per layer. By identifying such user-dependent layers, user-dependent training data is derived therefrom.

According to an embodiment, the model training module is further configured to retrain the deep learning module based on the user-dependent training data.

After deriving user-dependent training data resulting from the identification of user-dependent layers within the deep learning model, the model training module receives this user-dependent training data and retrains the deep learning models such that the retrained deep learning model is adapted to the user which runs the application on the mobile device. Hence, since the model is adapted to the user, less computation are needed as well.

According to an embodiment, the deep learning models are optimized through single-value-decomposition, sparse compression, layer compression and/or de-sparsification.

Optimization techniques for deep learning models, such as single-value-decomposition, sparse compression, layer compression and/or de-sparsification are used to optimize a deep learning model. Thus, the number of computations needed to run a model are reduced when one of those techniques are applied.

According to a second aspect the disclosure relates to a system comprising the system according to the first aspect and the mobile device, wherein the mobile device further comprises a feedback module configured to acquire the user feedback from inferences derived from the deep learning model.

The application running on a mobile device may receive user input data generated via, for example, sensors and this user input data may be utilized as input data for an inference module. The inference module also receives deep learning models and through the user input data combined with the deep learning models, a set of inferences is derived.

According to an embodiment, the mobile device further comprises a repository module configured to register intermediate data, the intermediate data comprising the user feedback on inferences, layer inputs and layer outputs, and/or a layer identification, and/or a model identification; and/or an application identification; and/or a user identification; and wherein the repository module is further configured to send the intermediate data to the layer identification module; and wherein the layer identification module is further configured to identify similar layers between the deep learning models and/or user-dependent layers within a deep learning model based on the intermediate data.

The intermediate data comprises the user feedback on inferences, layer inputs and layer outputs. It may further comprising an identification of a layer, a model, an application and/or a user. For each layer the intermediate data is registered in the repository. Thus in this repository module each layer in each model may be identified and be related to relevant data. The intermediate data, which is registered per layer, is used to identify similar layers between the deep learning models and/or user-dependent layers within a deep learning model.

According to a third aspect the disclosure relate to a mobile device comprising an application configured to receive deep learning models and sensor data and to derive therefrom a set of inferences, the application comprising a feedback module configured to generate user feedback data based on the set of inferences, a repository module configured to register intermediate data comprising the user feedback on inferences, layer inputs and layer outputs of the deep learning models, and/or a layer identification, and/or an application identification, and/or a user identification, and wherein the application is further configured to send the intermediate data to a training system, and to receive from the training system optimized learning models based on the intermediate data.

The application is running on a mobile device and receives deep learning models and sensor data. Therefrom, it derives a set of inferences from which user feedback may be generated. This may, for example, be done by a graphical user interface. Next, a repository module registers intermediate data. The intermediate data comprises the set of interferences, layer inputs and layer outputs of the deep learning models and user feedback data and may further comprising a layer identification, an application identification and/or a user identification. The application is further configured to send the intermediate data to a training system which may optimize the deep learning models based on the intermediate data. Finally, the application is further configured to receive optimized learning models from the training system.

According to a fourth aspect the disclosure relates to a method for optimizing deep learning models for use by an application running on a mobile device, the method comprising identifying similar layers between the deep learning models; calculating a shared layer for similar layers as an approximation of the similar layers; and updating the deep learning models of the application with the shared layer thereby obtaining updated deep learning models.

According to a fifth aspect, the disclosure relates to a computer program product comprising computer-executable instructions for performing the method according to the fourth aspect when the program is run on a computer.

According to a sixth aspect, the disclosure relates to a computer readable storage medium comprising the computer program product according to the fifth aspect.

According to a seventh aspect, the disclosure relates to a data processing system programmed for carrying out the method according to the fourth aspect.

### Brief Description of the Drawings

Fig. 1 illustrates an deep learning model comprising three layers;
Fig. 2 illustrates a system for optimizing deep learning models; and
Fig. 3 illustrates a system for optimizing deep learning models and an application running the optimized deep learning models.

### Detailed Description of Embodiment(s)

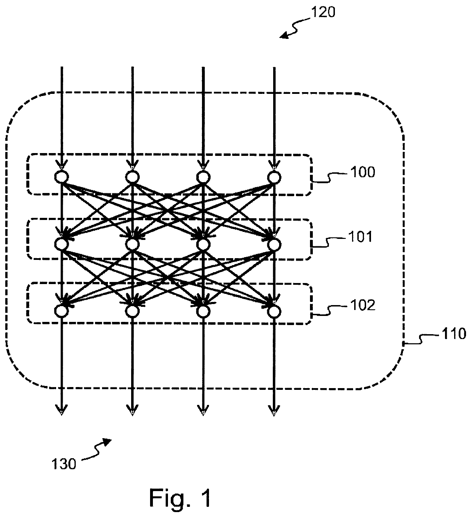

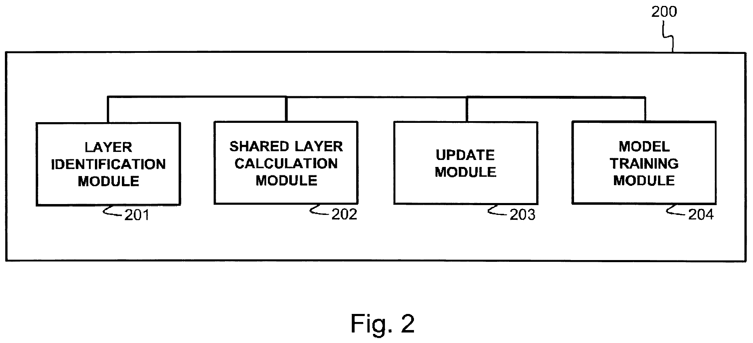

According to an embodiment, the disclosure relates to a computing system for optimization of deep learning models for use by an application running on a mobile device. Figure 1 illustrates such a deep learning model and figure 2 illustrates such a device. A deep learning model 110 comprises different layers such as, for example, 100, 101, 102 in the model. The first layer 100 of the deep learning model 110 receives layer input data 120 and each subsequent layer receives data from a layer above. Hence layer 101 receives data from layer 100 while layer 102 receives data from layer 101. Finally, the deep learning model 110 generates output data 130. Although the deep learning model 110 is illustrated having only three layer, in general a deep learning model has a multitude of layers.

Between different deep learning models there may be several similar layers. Two or more layers are similar if similar layer inputs provide similar layer outputs. Hence, these similar layer perform similar computations. Thus in order to optimize the deep learning models, such similar layers need to be identified. Therefore, the system 200 comprises a layer identification module 201 configured to identify similar layers between the deep learning models. Next, if such layers are identified, a shared layer calculation module 202 calculates a shared layer for similar layers. Such a shared layer is an approximation of the similar layers. Further, an update module 203 updates the deep learning models with the shared layer. Finally, updated deep learning models are obtained.

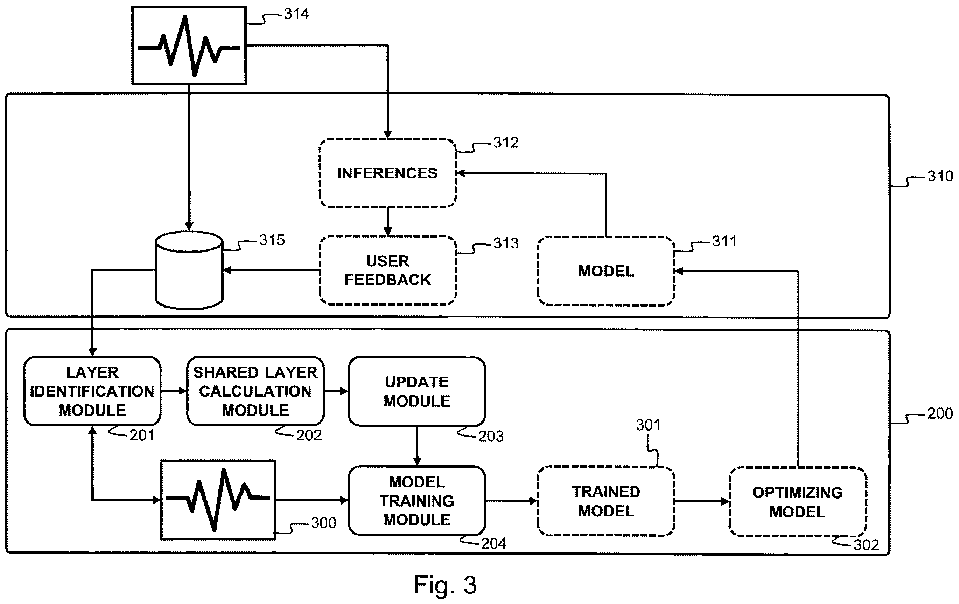

According to an embodiment, the system 200 further comprises a model training module 204. The system 200 is again illustrated in figure 3 wherein the model training module 204 receives training data 300. Based on this training data 300 the model training module 204 generates a trained deep learning model 301.

A deep learning model may also comprise user-dependent layers. According to an embodiment, the layer identification module 201 is configured to identify such user-dependent layers within a deep learning model based on user feedback 313. An application 310 that is running on a device, receives a model 311 and user input data 314. This user input data 314 may, for example, be generated by sensors of the device. The model 311 and the user data 314 are used to calculate inferences 312. These inferences 312 are than evaluated by a user trough, for example, a graphical user interface thereby obtaining user feedback 313. The user feedback 313 and user input data 314 are forwarded to the layer identification module 201 which identifies user-dependent layers within a deep learning model. Next, if user-dependent layers are identified, user-dependent training data may be derived therefrom which replaces the original training data 300.

According to an embodiment, the model training module 204 is further configured to retrain the deep learning model based in the user-dependent training data.

Finally, the deep learning models may be also optimized 302 through, for example, single-value-decomposition, sparse compression, layer compression and/or de-sparsification.

According to an embodiment, the mobile device further comprises a repository module 315. In this repository module 315 intermediate data is registered. The intermediate data comprises the user feedback on inferences, layer inputs and layer outputs and may further comprising a layer identification, a model identification, an application identification and/or a user identification. Next, the repository module 315 sends the intermediate data to the layer identification module 201, which identifies similar layers between the deep learning models and/or user-dependent layers within a deep learning model based on the intermediate data. Based on this identification the system may again update the deep learning models and optimize it. Finally, the optimized deep learning models are send forward to the application 310.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computing system (200) for optimization of deep learning models (110) for use by an application (310) running on a mobile device, the system (200) comprising:
- a layer identification module (201) configured to identify similar layers between the deep learning models;
- a shared layer calculation module (202) configured to calculate a shared layer for similar layers as an approximation of the similar layers; arid
- an update module (203) configured to update the deep learning models of the application with the shared layer thereby obtaining updated deep learning models.

2. The system according to claim 1, wherein layers are identified as similar layers if similar layer inputs provide similar layer outputs.

3. The system according to claim 2, wherein the shared layer calculation module (202) is further configured to calculate the shared layer based on the average and standard deviation of the similar layer inputs and layer outputs.

4. The system according to claim 1 further comprising a model training module (204) configured to train a deep learning model of the deep learning models based on training data (300).

5. The system according to claim 4 wherein the layer identification module is further configured to identify user-dependent layers within the deep learning model based on user feedback (313) and to derive therefrom user-dependent training data.

6. The system according to claim 5 wherein the model training module (204) is further configured to retrain the deep learning module based on the user-dependent training data.

7. The system according to claim 4 or 6 wherein the deep learning models are optimized through single-value-decomposition, sparse compression, layer compression and/or de-sparsification.

8. A system comprising the system according to claim 5 and the mobile device, wherein the mobile device further comprises a feedback module configured to acquire the user feedback on inferences derived from the deep learning model.

9. The system according to claim 8 wherein the mobile device further comprises a repository module configured to register intermediate data, the intermediate data comprising:
- the user feedback on inferences;
- layer inputs and layer outputs; and/or
- a layer identification; and/or
- a model identification; and/or
- an application identification; and/or
- a user identification;
and wherein the repository module is further configured to send the intermediate data to the layer identification module; and wherein the layer identification module is further configured to identify similar layers between the deep learning models and/or user-dependent layers within a deep learning model based on the intermediate data.

10. A mobile device comprising an application configured to receive deep learning models and sensor data and to derive therefrom a set of inferences, the application comprising:
- a feedback module configured to generate user feedback data based on the set of inferences;
- a repository module configured to register intermediate data comprising:
- the user feedback on inferences;
- layer inputs and layer outputs of the deep learning models; and/or
- a layer identification; and/or
- an application identification; and/or
- a user identification;
and wherein the application is further configured to send the intermediate data to a training system, and to receive from the training system optimized learning models based on the intermediate data.

11. A method for optimizing deep learning models for use by an application running on a mobile device, the method comprising:
- identifying similar layers between the deep learning models;
- calculating a shared layer for similar layers as an approximation of the similar layers; and
- updating the deep learning models of the application with the shared layer thereby obtaining updated deep learning models.

12. A computer program product comprising computer-executable instructions for performing the method according to claim 11 when the program is run on a computer.

13. A computer readable storage medium comprising the computer program product according to claim 12.

14. A data processing system programmed for carrying out the method according to claim 11.
